# EUROPÄISCHE PATENTSCHRIFT

(11) **EP 1 178 582 B1**
(45) Veröffentlichungstag und Bekanntmachung des Hinweises auf die Patenterteilung: **23.07.2008**
(21) Anmeldenummer: 01118249.0
(22) Anmeldetag: 30.07.2001
(51) Int. Cl.: H02B 1/052

(54) **Installationsgerät mit Riegel zur Montage an einer Hutschiene**
Installation apparatus with a latch for mounting on a rail
Appareil d'installation comportant un verrouillage de fixation sur un rail

(30) Priorität: 31.07.2000 DE 10037214
(43) Veröffentlichungstag der Anmeldung: 06.02.2002
(73) Patentinhaber: AEG Niederspannungstechnik GmbH & Co. KG, 24534 Neumünster (DE)
(72) Erfinder: Hillebrand, Dietmar, 31848 Bad Münder (DE)
(74) Vertreter: TBK-Patent

(56) Entgegenhaltungen:
- US-A- 5 904 592
- PATENT ABSTRACTS OF JAPAN vol. 015, no. 106 (E-1044), 13. März 1991 (1991-03-13) & JP 02 310999 A (MATSUSHITA ELECTRIC WORKS LTD), 26. Dezember 1990 (1990-12-26)

## Beschreibung

Die vorliegende Erfindung betrifft ein Installationsgerät, insbesondere ein elektrisches Installationsgerät, wie beispielsweise ein Sicherungsautomat (LS-Schalter) zur Montage an einer Hutschiene.

Gattungsgemäße Installationsgeräte zur Montage an Hutschienen sind in der Regel Sicherungsautomaten (LS-Schalter) mit standardisierten Montageabschnitten entsprechend der Form der Hutschiene und genormten, elektrischen Anschlüssen zur Verwendung für sogenannte Sammelschienen, jedoch mit unterschiedlichen Auslösecharakteristiken und Nennstromstärken.

Aus dem Stand der Technik, beispielsweise gemäß der DE 295 05 531 U1 ist ein elektrisches Installationsgerät dieser Gattung bekannt. Dieses Gerät besteht aus einem im wesentlichen rechteckigen, flach bauenden Gehäuse, an dessen schmaler Vorderseite eine Schaltereinrichtung vorgesehen ist. Die schmale Rückseite ist als Montageabschnitt zur Befestigung des Gehäuses an einer Hutschiene ausgebildet. Der Montageabschnitt weist eine im wesentlichen ebene, entsprechend den Abmessungen der Hutschiene dimensionierte Anlagefläche auf, die an ihrer oberen, schmalen Endkante von einem klauenförmigen Vorsprung begrenzt wird, der als eine über die gesamte Breite der schmalen Gehäuseseite sich erstreckende Halteleiste am Gehäuse einstückig ausgebildet ist. An der im Längsabstand bezüglich des Gehäuses sich ausbildenden unteren Endkante der ebenen Anlagefläche ist die Rückseite des Gehäuses mit einer Führung für einen längsbewegbaren Riegel oder Schieber ausgeformt. Der Riegel weist dabei an seiner zum klauenförmigen Vorsprung zugewandten Oberkante eine in Längsrichtung vorragende Nase auf, welche das Gegenstück des gehäuseseitigen klauenförmigen Vorsprungs darstellt.

Um das bekannte elektrische Installationsgerät an der Hutschiene zu montieren, wird der Riegel nach unten, d. h. weg vom klauenförmigen Vorsprung verschoben, soweit, bis der Längsabstand des klauenförmigen Vorsprungs zur Nase des Riegels größer ist als die Breite der Hutschiene und somit ein Einsetzen der Hutschiene zwischen dem oberen Vorsprung und der riegelseitigen Nase erlaubt. Sobald die Anlagefläche des Gehäuses während dessen Montage an der Hutschiene anliegt, wird das Installationsgerät geringfügig nach unten verschoben, so dass der klauenförmige Vorsprung die Hutschiene oberseitig hintergreift. Anschließend wird der Riegel nach oben in eine selbst arretierende Rastposition bewegt, in der die riegelseitige Nase ebenfalls die Hutschiene unterseitig hintergreift und somit das Installationsgerät an der Hutschiene fixiert.

Angesichts vorstehender Beschreibung liegt es auf der Hand, dass der Riegel zumindest in seiner die Hutschiene hintergreifenden Position verrastet sein muss, um ein unbeabsichtigtes sich Lösen des elektrischen Installationsgerätes von der Hutschiene zu verhindern. Hierfür weist der gattungsgemäße Riegel ein Federelement auf, welches mit einer gehäuseseitigen Rasteinrichtung in Wirkeingriff bringbar ist und wodurch zwei Rastpositionen definiert werden. Diese Rastpositionen entsprechen zum einen jener Stellung, in welcher der Riegel mit der Hutschiene außer Eingriff ist und jener Raststellung, in welcher die riegelseitige Nase die Hutschiene unterseitig hintergreift. Um trotz einer derartigen Rasteinrichtung ein unbeabsichtigtes Lösen des Riegels zu verhindern, müssen die Rastpositionen sicher gehalten werden.

Die US-A-5 904 592 offenbart ein Installationsgerät zur Montage an einer Hutschiene entsprechend dem Oberbegriff des Anspruchs 1, wobei die beiden Federstege lediglich an ihren jeweiligen einen Enden an den Riegelrahmen fixiert sind, wohingehen, die anderen Enden frei beweglich federelastisch gelagert sind.

Der Erfindung liegt die Aufgabe zugrunde, ein gattungsgemäßes elektrisches Installationsgerät mit höherer Funktionssicherheit zu schaffen.

Diese Aufgabe wird erfindungsgemäß durch ein Installationsgerät mit den Merkmalen des Patentanspruchs 1 gelöst.

Durch die Anordnung der beiden in Schieberichtung des Riegels sich erstreckenden Federstege, welche an ihren jeweiligen Endabschnitten am Riegel fixiert sind, wird der gehäuseseitige Zapfen mit einer erhöhten Federkraft zwischen den beiden Federstegen eingespannt, wodurch zumindest jene Raststellung, in welche der Riegel mit der Hutschiene in Eingriff ist, sicherer, weil eine höhere Federkraft, gehalten wird.

Die Weiterbildung des Erfindungsgegenstands nach Anspruch 2 sieht vor, die Hinterschneidungen jeweils durch einen Vorsprung an den beiden Federstegen auszubilden, die gemeinsam eine Verengung des Parallelabstands zwischen beiden Federstegen ausbilden. Gemäß Anspruch 3 ist dabei vorgesehen, dass der gehäuseseitige Zapfen 2 voneinander abgewandte, achssymmetrische Nockenbahnen bildet, die jeweils einem Federsteg zugewandt sind und sich in Schieberichtung erstrecken. Durch diese Ausbildung wird auf den Zapfen über die Vorsprünge beidseits eine gleichmäßige Druckkraft an sich gegenüberliegenden Punkten der beiden Nockenbahnen aufgebracht, wodurch der Zapfen zwischen den beiden Federstegen symmetrisch eingespannt wird. Eine einseitige Deformation des Zapfens kann dadurch sicher vermieden werden.

Nach Anspruch 5 ist es ferner vorgesehen, jede Nockenbahn mit einer dreiecksförmigen bzw. doppelkeilförmigen Auswölbung oder Erhöhung in Richtung zum jeweils gegenüberliegenden Federsteg auszubilden, an die sich in Schieberichtung zumindest ein den jeweiligen Federsteg parallel beabstandeter Nockenabschnitt anschließt. Bei einer Verschiebung des Riegels von einer Rastposition in eine andere müssen die beiden federstegseitigen Vorsprünge diese dreieckigen Auswölbungen der beiden Nockenbahnen überwinden, wodurch der Riegel in die jeweilige Rastposition durch die Federkräfte der beiden beidseits wirkenden Federstege einschnappt.

Nach Anspruch 6 ist es ferner vorgesehen, einen Anschlag am Gehäuse auszubilden, der in Schieberichtung vom Zapfen beabstandet ist und der mit zwei, die beiden Raststellungen jeweils definierende Anschlagskanten des Riegels in Anlage bringbar ist, zwischen denen der gehäuseseitige Anschlag angeordnet ist. Durch die Ausbildung des bezüglich des Zapfens externen Anschlags wird die Positionierung des Riegels in den Raststellungen für ein Freigeben und Verriegeln der Hutschiene sicher gewährleistet, unabhängig davon, ob sich die federstegseitigen Vorsprünge oder der gehäuseseitige Zapfen bei mehrmaliger Betätigung des Riegels abnützen und sich damit das Federspiel ggf. vergrößert.

Weitere vorteilhafte Ausbildungen des erfindungsgemäßen Installationsgerätes sind Gegenstand der übrigen Unteransprüche.

Die Erfindung wird nachstehend anhand eines bevorzugten Ausführungsbeispiels unter Bezugnahme auf die begleitenden Zeichnungen näher erläutert.

Es zeigen:
Fig. 1 eine Perspektivenansicht des Montageabschnitts am Gehäuse eines elektrischen Installationsgerätes gemäß einem bevorzugten Ausführungsbeispiel der Erfindung,
Fig. 2 den Montageabschnitt einschließlich eines darin verschiebbar am Gehäuse gelagerten Riegels gemäß der Erfindung in einer mit der Hutschiene außer Eingriff stehenden Raststellung und
Fig. 3 den Montageabschnitt samt Riegel gemäß Fig. 2 in eine mit der Hutschiene in Eingriff stehenden Raststellung.

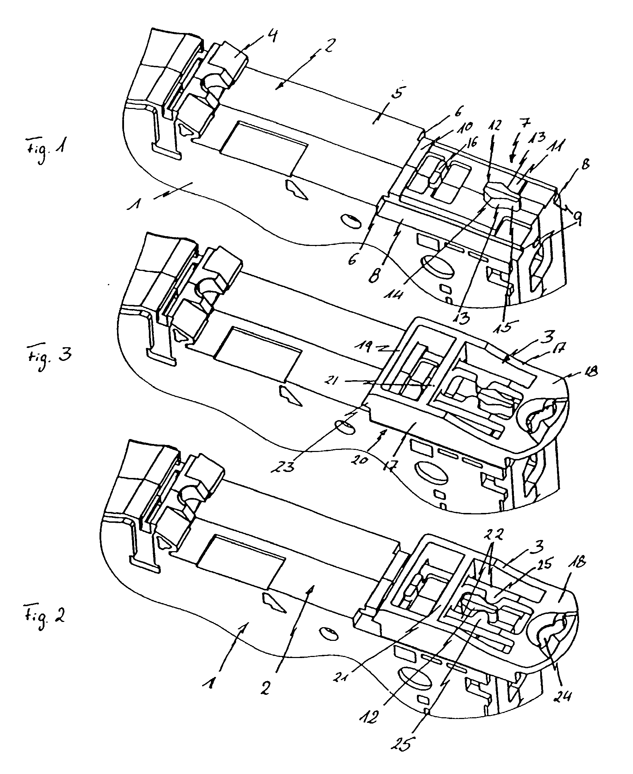

Wie aus der Fig. 1 zu entnehmen ist, ist ein Gehäuse 1 eines elektrischen Installationsgerätes, vorzugsweise ein Leitungsschutzschalter (LS-Schalter) mit einem Montageabschnitt 2 zur Befestigung an einer nicht weiter gezeigten Hutschiene ausgebildet, der unter anderem einen am Gehäuse 1 verschiebbar geführten, sowie manuelle betätigbaren Arretierriegel 3 umfasst. Wie nachfolgend noch genauer ausgeführt wird, dient der Arretierriegel (nachfolgend Riegel bezeichnet) 3 zur Fixierung des Gehäuses 1 an der nicht gezeigten Hutschiene.

Gemäß Fig. 1, welche einen für die Erfindung wesentlichen Bereich des Montageabschnitts 2 zeigt, ist das Gehäuse 1 des Installationsgerätes in Form eines flachen sowie länglichen Quaders ausgebildet, wobei sich der Montageabschnitt 2 an einer schmalen und länglichen Rückseite des Gehäuses befindet. Das Gehäuse 1 besteht dabei aus zwei Gehäusehälften, die mittels Schrauben und/oder Klemmelementen (nicht gezeigt) miteinander gekoppelt sind und dabei einen minimalen Kopplungsspalt ausbilden. Der Montageabschnitt 2 besteht dabei aus einer Anlagefläche 5, die im wesentlichen eben und bezüglich ihrer Abmessungen einer standardisierten Hutschiene (nicht weiter gezeigt) angepasst ist. An einem, in Längsrichtung des Gehäuses 1 gesehen, oberen Rand der Anlagefläche 5 ist ein klauenförmiger Vorsprung oder Leiste 4 angeordnet, der vorzugsweise einstückig mit dem Gehäuse 1 ausgeformt ist und eine Art Nut zur Aufnahme einer Oberkante der Hutschiene ausbildet. Dieser letztgenannte Bereich des Montageabschnitts 2 entspricht somit im wesentlichen dem Eingangs erläuterten Stand der Technik, so dass bezüglich einer weiterführenden Beschreibung der Funktionsweise und Gestaltung des klauenförmigen Vorsprungs 4 auf diesen Stand der Technik verwiesen werden kann.

Gemäß Fig. 1 wird der untere Rand der Anlagefläche 5 begrenzt durch einen Rücksprung oder Absatz 6, wodurch sich ein bezüglich der Anlagefläche 5 zurückgesetzter Führungsabschnitt 7 ergibt. In diesem Abschnitt 7 befindet sich eine Gleit- und Führungseinrichtung in Form von zwei in Längsrichtung des Gehäuses sich erstreckenden, parallel beabstandeten Schienen bzw. Gleitflächen 8, welche ebenfalls einstückig mit dem Gehäuse 1 ausgebildet sind. An den Schienen bzw. Gleitflächen 8 sind jeweils nutenförmige Hinterschneidungen 9 am Gehäuse 1 ausgeformt, wodurch ein Art Schwalbenschwanzführung für den Riegel 3 ausgebildet wird.

Am Übergangsbereich zwischen der Anlagefläche 5 und dem Führungsabschnitt 7 ist eine Stützfläche 10 für die Hutschiene vorgesehen, welche eine exaktere Positionierung des elektrischen Installationsgerätes an der Hutschiene ermöglicht.

Wie ferner aus Fig. 1 zu entnehmen ist, ist in einem Zwischenabschnitt 11, zwischen den beiden Gleit- und Führungsflächen 9 für den Riegel 3 eine Rasteinrichtung für das Verrasten des Riegels 3 in zwei Raststellungen vorgesehen. Diese Rasteinrichtung besteht aus einem Zapfen 12, der auf der Kopplungslinie beider Gehäusehälften sitzt und jeweils zur Hälfte an jeder Gehäusehälfte ausgebildet ist. Der Zapfen 12 bildet bei montiertem Gehäuse 1 zwei voneinander abgewandte Nockenbahnen 13, die sich längs der beiden Gleit- und Führungsschienen 8 bzw. -flächen erstrecken und zu diesen zugewandt sind. Jede Nockenbahn 13 weist dabei eine zur benachbarten Führungsschiene 8 hin ausgerichtete Auswölbung 14 vorzugsweise in Dreiecksform auf, an die sich in Längsrichtung ein im wesentlichen gerader, parallel zur Führungsschiene 8 sich erstreckender Nockenabschnitt 15 anschließt. Gemäß Fig. 1 sind die beiden Nockenbahnen 13 achssymmetrisch ausgebildet.

Des weiteren ist ein leistenförmiger Anschlag 16 einstückig am Gehäuse 1 ausgebildet, der in Längs- bzw. in Schieberichtung des Riegels 3 in Richtung zur Anlagefläche 5 des Montageabschnitts 2 vom Zapfen 12 beabstandet ist.

Der Riegel ist in den Figuren 2 und 3 detailliert dargestellt.

Gemäß der Fig. 2 und 3 hat der Riegel 3 eine Gitter- bzw. Rahmenkonstruktion mit einem im wesentlichen rechteckigen, aus zwei Längsstegen 17 und zwei endseitig der Längsstege angeordneten Querstegen 18, 19 bestehenden einstückigen Grundrahmen 20, einer die beiden Längsstege 17 in deren Mittenabschnitt miteinander verbindenden Querstrebe 21 sowie zwei parallel beabstandete, in Schieberichtung des Riegels 3 sich erstreckende Federstege 22, die an ihren einen Enden einstückig mit der Querstrebe 21 in deren Mittenabschnitt und an ihren jeweiligen anderen Enden mit dem einen Quersteg 18 des Grundrahmens 20 einstückig befestigt sind. Die beiden Längsstege 17 des Grundrahmens 20 weisen an ihrer Unterkante jeweils zwei einander zugewandte Längsleisten auf, welche in die Nuten 9 an den beiden sich gegenüberliegenden Gleit- und Führungsschienen 8 des Gehäuses 1 eingreifen und somit den Riegel 3 verschiebbar am Gehäuse 1 halten.

Der eine Quersteg 19 des Grundrahmens 20, welcher gemäß Fig. 2 der Auflagefläche 5 zugewandt ist, bildet einen nasenförmigen Vorsprung 23, welcher in einer Verriegelungsraststellung des Riegels 3 mit der Hutschiene in Eingriff ist. Der andere, gegenüberliegende Quersteg 18 des Grundrahmens 20 ist plattenförmig ausgebildet und hat eine Betätigungseinrichtung 24 in Form einer Aufnahme oder eines Lochs, die in der Platte ausgebildet ist und die zur Aufnahme eines Schlitz- und/oder Kreuzschlitzschraubenziehers dient.

Die beiden längs des Riegels 3 sich erstreckenden Federstege 22 sind jeweils im Parallelabstand zu den äußeren Längsstegen 17 des Grundrahmens 20 angeordnet und weisen in ihrem Mittenabschnitt jeweils einen noppenförmigen Vorsprung 25 auf, derart, dass beide noppenförmigen Vorsprünge 25 unter Ausbildung einer Verengung sich gegenüberliegen. Vorzugsweise hat jeder noppenförmige Vorsprung 25 ein abgerundetes freies Ende. Der freie Abstand zwischen den beiden noppenförmigen Vorsprüngen 25 ist derart bemessen, dass die Vorsprünge 25 im montierten Zustand des Riegels 3 sowie in einer die Hutschiene freigebenden Raststellung des Riegels 3 an den ebenen Abschnitten 15 der beiden voneinander abgewandten Nockenbahnen 13 des Zapfens 12 noch anliegen, wie dies in Fig. 2 dargestellt ist.

Wie ferner in den Figuren 2 und 3 dargestellt ist, befindet sich der leistenförmige Anschlag 16 am Gehäuse 1 des elektrischen Installationsgerätes zwischen dem die Rastnase 23 ausbildenden Quersteg 19 des Grundrahmens 20 sowie der Querstrebe 21 in einem den Federstegen 22 abgewandten, von der Rahmenkonstruktion des Riegels 3 ausgebildeten Hohlraumabschnitt.

Zur Funktionsweise des erfindungsgemäßen Riegels 3 wird folgendes ausgeführt:

Für ein Montieren des elektrischen Installationsgerätes an einer, in den Figuren nicht dargestellten Hutschiene wird der Riegel 3 zuerst in eine erste Stellung, vorzugsweise eine Raststellung (Entriegelungsposition) gebracht, wie sie in Fig. 3 dargestellt ist. In dieser Position ist der Riegel 3 von der Anlagefläche 5 in Längsrichtung des Installationsgerätegehäuses 1 weg verschoben, wobei die einstückig mit dem Gehäuse 1 ausgebildete Anschlagsleiste 16 an der riegelseitigen Anschlagskante, d. h. an dem Quersteg 19 des Grundrahmens 20 des Riegels 3 anliegt. Gehalten wird der Riegel in dieser Position durch die beiden Federstege 22 bzw. durch die daran ausgebildeten Vorsprünge 25, die an dem geraden Abschnitt der Nockenbahn 13 anliegen und sich gegen die Auswölbungen 14 der beiden voneinander abgewandten Nockenbahnen 13 am Übergangsbereich der Auswölbungen 14 zu dem geraden Abschnitt 15 der Nockenbahnen 13 abstützen. Der Abstand zwischen dem nasenförmigen Vorsprung 23 an dem einen Quersteg 19 des Riegels 3 und dem gegenüberliegenden, klauenförmigen Vorsprung 4 am Gehäuse 1 des elektrischen Installationsgerätes ist derart bemessen, dass eine herkömmliche Hutschiene zwischen beiden Vorsprüngen 4, 23 eingelegt und an die Anlagefläche 5 angelegt werden kann. In anderen Worten ausgedrückt, wird in dieser Raststellung des Riegels 3 das elektrische Installationsgerät derart an der Hutschiene montiert, indem zuerst der klauenförmige Vorsprung 4 an der Oberkante der nicht weiter gezeigten Hutschiene angesetzt wird, derart, dass der Vorsprung 4 die Oberkante der Hutschiene hintergreift, worauf anschließend das elektrische Installationsgerät quer zur Hutschiene nach unten gedrückt wird, bis die Rastnase 23 des Riegels 3 an der Unterkante der Hutschiene vorbeigleitet und das Gehäuse 1 des elektrischen Installationsgerätes über die Anlagefläche 5 an der Oberseite der Hutschiene anliegt.

In dieser Stellung wird nunmehr der Riegel 3 aus der in Fig. 3 dargestellten Entriegelungsposition in seine zweite Raststellung (Verriegelungsposition) verschoben. Hierfür wird vorzugsweise ein Werkzeug in Form eines Schraubenziehers an der Betätigungseinrichtung, vorzugsweise der Aufnahme oder dem Loch 24 angesetzt und der Riegel 3 in Richtung zur Anlagefläche 5 längs der Gleit- und Führungsschienen 8 verschoben. Während dieser Verschiebebewegung gleiten die an den Federstegen 22 ausgebildeten Vorsprünge 25 an den beiden Nockenbahnen 13 ab, wobei die Federstege 22 durch die Auswölbungen 14 der Nockenbahnen 13 in Richtung zu den Längsstegen 17 des riegelseitigen Grundrahmens 20 elastisch verformt werden. Sobald die beiden Vorsprünge 25 den oberen Todpunkt der beiden Nockenbahnen 13 erreicht haben, wird der Riegel 3 durch die Federkraft der beiden elastisch verformten Federstege 22 längs der nunmehr abfallenden Nockenbahnen 13 in Verriegelungsrichtung weiter verschoben, wobei der Riegel 3 quasi selbsttätig in die Verriegelungsposition als Rasstellung einschnappt.

Begrenzt wird diese Raststellung ebenfalls durch die einstückig mit dem Gehäuse 1 ausgebildete Anschlagsleiste 16, welche nunmehr an der Querstrebe 21 des Riegels 3 in Anlage kommt und somit eine weitere Verschiebung des Riegels 3 in Richtung zur Anlagefläche 5 blockiert. In dieser Position wird somit der Riegel zwischen der gehäuseseitigen Anschlagsleiste 16 und dem Zapfen 12 eingespannt, an welchem in dieser Position nach wie vor die beiden gegenüberliegenden Vorsprünge 25 an dem Zapfen 12 anliegen. Diese Position wird in Fig. 2 dargestellt.

Bei jeder Verschiebung des Riegels aus der Eingriffsposition in die Freigabeposition und entgegengesetzt müssen die Vorsprünge 25 an den Federstegen 22 die Auswölbungen 14 der beiden voneinander abgewandten Nockenbahnen 13 am Zapfen 12 überwinden, wodurch der Riegel 3 in die jeweilige Raststellung eingespannt wird.

In der Verriegelungsposition wird wie vorstehend bereits ausgeführt, der Riegel 3 dadurch festgehalten, indem die Querstrebe 21 auf ihrer den Federstegen 22 abgewandten Seite an der gehäuseseitigen Anschlagsleiste 16 anliegt, während sich die Vorsprünge 25 der beiden Federstege 22 am Zapfen 12 abstützen. Alternativ- oder zusätzlich kann die Länge des Zapfens 12 in Schieberichtung des Riegels 3, insbesondere die Lange des geraden Abschnitts 15 der beiden Nockenbahnen 13 derart dimensioniert sein, dass in der Verriegelungsposition sich der Riegel 3 an seinem hinteren, die Betätigungsrichtung 24 ausbildenden Quersteg 18 am Zapfen 12 (d. h. dem hinteren Ende des geraden Abschnitts 15 der Nockenbahnen 13) abstützt, während die beiden Vorsprünge 25 der Federstege 22 am vorderen Ende der Auswölbungen 14 der Nockenbahnen 13 anliegen und somit den Zapfen 12 zwischen sich und dem die Betätigungsrichtung ausbildenden Quersteg des Riegels 3 einklemmen.

Um von der Verriegelungsposition wieder in die Freigabeposition zu kommen, müssen beim Verschieben des Riegels die beiden Vorsprünge 25 der Federstege 22 die Auswölbungen 14 der Nockenbahnen 13 am Zapfen 12 erneut überwinden, wobei die Federstege 22 in Richtung der Längsstege 17 des Grundrahmens 20 des Riegels 3 verformt wird und die hierdurch erzeugte Federkraft nach Überschreiten des oberen Totpunkts der beiden Auswölbungen 15 der Nockenbahnen 13 ein Zurückschnappen des Riegels 3 in die Freigabeposition bewirkt. Diese Schnappbewegung wird wiederum durch die gehäuseseitige Anschlagsleiste 16 begrenzt, welche mit dem vorderen Quersteg 19 an dessen dem nasenförmigen Vorsprung 23 abgewandten Rückseite in Anlage kommt.

Durch die endseitige Fixierung beider Federstege 22 sowie die im wesentlichen mittige Anordnung der Vorsprünge 25 wird trotz der Kunststoffausführung des Riegels eine erhebliche Federkraft auf den Zapfen 12 erzeugt, die ein sicheres Halten des Riegels 3 zumindest in der Verriegelungsposition als eine Raststellung gewährleistet. Die räumliche Trennung des die Nockenbahnen 13 ausbildenden Zapfens 12 sowie der Anschlagsleiste 16 gewährleistet ferner ein genaues Plazieren des Riegels 3 in den einzelnen Raststellungen bzw. der Verriegelungsposition auch nach einer Mehrzahl von Betätigungen des Riegels 3, in deren Verlauf eine verschleißbedingte Abnutzung der Nockenbahnen 13 und/oder der federstegseitigen Vorsprünge 25 auftreten kann, was zu einem erhöhten Spiel zwischen dem Zapfen 12 und den Vorsprüngen 25 führen könnte. Darüber hinaus dienen nur jene Querstege 19;18 als Anschlagskanten, welche infolge ihrer Zusatzfunktionen, nämlich zum einen die Ausbildung der Betätigungseinrichtung 24 und zum anderen die Ausbildung der Rastnase 23 für ein Hintergreifen der Hutschiene ohnehin stabil ausdimensioniert sind, so dass die Querstrebe 21 verhältnismäßig filigran ausgeführt sein kann, und damit Material eingespart wird.

Da der erfindungsgemäße Zapfen durch beide Gehäuseschalen ausgebildet wird sowie achssymmetrisch ist, können die Formwerkzeuge für die Gehäuseschalen einfach aufgebaut sein.

Die Erfindung betrifft ein elektrisches Installationsgerät mit einem Gehäuse 1, an welchem ein Montageabschnitt 2 mit einem verschiebbar daran gelagerten Riegel 3 ausgebildet ist. Der Riegel 3 hat ein Federteil, welches mit einer gehäuseseitigen Rasteinrichtung zusammenwirkt, um zumindest eine Verriegelungsposition zu definieren. Das Federteil besteht aus zwei in Schieberichtung des Riegels 3 sich erstreckenden parallel beabstandeten Federstegen 22, die an ihren beiden jeweiligen Endabschnitten am Riegel 3 fixiert sind und in ihren Mittenabschnitten jeweils eine Hinterschneidung bilden, welche mit einem zwischen den Federstegen 22 angeordneten Zapfen 12 der Rasteinrichtung in Eingriff sind.

## Patentansprüche

1. Installationsgerät zur Montage an einer Hutschiene mit einem Gehäuse (1), dessen eine Seite zu einem Montageabschnitt (2) ausgebildet ist, in dem ein verschiebbar am Gehäuse (1) gelagerter Riegel (3) vorgesehen ist, der in eine erste Stellung für ein in Eingriffkommen mit der Hutschiene und in eine zweite Stellung für ein außer Eingriffkommen mit der Hutschiene bringbar ist, wofür der Riegel (3) ein Federteil hat, das mit einer Rasteinrichtung des Gehäuses (1) zusammenwirkt und das zwei in Schieberichtung sich erstreckende parallel beabstandete Federstege (22) hat, die in ihren Mittenabschnitten jeweils eine Hinterschneidung bilden, welche mit einem zwischen den Federstegen (22) angeordneten Zapfen (12) der Rasteinrichtung in Eingriff sind
**dadurch gekennzeichnet, dass**
die beiden Federstege (22) an ihren beiden jeweiligen Endabschnitten am Riegel (3) fixiert sind.

2. Installationsgerät nach Anspruch 1, **dadurch gekennzeichnet, dass**
die Hinterschneidungen jeweils durch einen noppenförmigen Vorsprung (25) gebildet ist, wobei sich die beiden Vorsprünge (25) unter Ausbildung einer Verengung des Parallelabstands beider Federstege (22) gegenüberliegen.

3. Installationsgerät nach Anspruch 2, **dadurch gekennzeichnet, dass**
der Zapfen (12) zwei voneinander abgewandte achssymmetrische Nockenbahnen (13) bildet, die jeweils einem Federsteg (22) zugewandt sind und sich in Schieberichtung erstrecken.

4. Installationsgerät nach Anspruch 3, **dadurch gekennzeichnet, dass**
die beiden noppenförmige Vorsprünge (25) an den Nockenbahnen (13) federelastisch durch die Stege (22) gehalten sind und den Zapfen zwischen sich einspannen.

5. Installationsgerät nach Anspruch 4, **dadurch gekennzeichnet, dass**
das jede Nockenbahn (13) eine im wesentlichen dreiecksförmige Auswölbung (14) in Richtung zum jeweils gegenüberliegenden Federsteg (22) hat, an die sich in Schieberichtung ein zum jeweiligen Federsteg (22) paralleler Abschnitt (15) anschließt.

6. Installationsgerät nach Anspruch 5, **gekennzeichnet durch** einen in Schieberichtung vom Zapfen (12) beabstandeter gehäuseseitigen Anschlag (16), der mit zwei die beiden Stellungen definierende, den Anschlag (16) zwischen sich aufnehmende Anschlagskanten des Riegels (3) in Anlage bringbar ist.

7. Installationsgerät nach Anspruch 6, **dadurch gekennzeichnet, dass**
der Riegel (3) eine Rahmenkonstruktion mit einem im wesentlichen rechteckigen Grundrahmen ist (20), dessen Längsstege (17) durch eine im Mittenbereich der Längsstege (17) angeordneten Querstrebe (21) miteinander verbunden sind, an dem die einen Enden der Federstege (22) fixiert sind und der vorzugsweise die eine Anschlagskante des Riegels (3) bildet.

8. Installationsgerät nach Anspruch 7, **dadurch gekennzeichnet, dass**
die anderen Enden der Federstege (22) an einem Quersteg (18) der Grundrahmens (20) fixiert sind, wobei ein zweiter Quersteg (19) des rechteckigen Grundrahmens (20) die andere Anschlagskante bildet und den als Leiste ausgebildeten gehäuseseitigen Vorsprung (16) zwischen sich und der Querstrebe (21) aufnimmt.

9. Installationsgerät nach Anspruch 8, **dadurch gekennzeichnet, dass**
die beiden Federstege (22) jeweils einen Parallelabstand zu den jeweils benachbarten Längsstegen (17) des Grundrahmens (20) aufweisen, der eine freie elastische Verformung der Federstege (22) in Richtung zu den jeweiligen Längsstegen (17) ermöglicht.

10. Installationsgerät nach Anspruch 9, **dadurch gekennzeichnet, dass**
der Abstand der gehäuseseitigen Anschlagsleiste (16) zum Zapfen (12) so gewählt ist, dass die beiden Noppen (25) beim Verschieben des Riegels (3) von einer Stellung in die andere Auswölbungen (14) der Nockenbahnen (13) unter elastischer Verformung der Federstege (22) überwinden müssen und **dadurch** in den beiden Stellungen bei in Anlage kommen der Vorsprungsleiste (16) mit einer der Anschlagskanten des Riegels (3) gehalten werden.

## Claims

1. Installation apparatus for mounting on a rail, having a housing (1), the one side of which is configured as a mounting portion (2), in which there is provided a latch (3) which is mounted displaceably on the housing (1) and can be brought into a first position in order to engage with the rail and into a second position in order to disengage from the rail, for which purpose the latch (3) has a resilient part which cooperates with a catching device of the housing (1) and which has two resilient webs (22) which extend in the sliding direction at a parallel spacing and form in the central portions thereof respectively an undercut, which are in engagement with a pin (12) of the catching device disposed between the resilient webs (22),
**characterised in that**
the two resilient webs (22) are fixed on the latch (3) at the two respective end portions thereof.

2. Installation apparatus according to claim 1, **characterised in that** the undercuts are formed respectively by a knob-shaped projection (25), the two projections (25) being oppositely situated with formation of a narrowing of the parallel spacing of the two resilient webs (22).

3. Installation apparatus according to claim 2, **characterised in that** the pin (12) forms two axially symmetrical cam paths (13) which are orientated away from each other, are orientated respectively towards a resilient web (22) and extend in the sliding direction.

4. Installation apparatus according to claim 3, **characterised in that** the two knob-shaped projections (25) are retained in a resilient manner on the cam paths (13) by the webs (22) and clamp the pin between them.

5. Installation apparatus according to claim 4, **characterised in that** each cam path (13) has an essentially triangular convexity (14) in the direction of the respectively oppositely situated resilient web (22), on which a portion (15) which is parallel to the respective resilient web (22) abuts in the sliding direction.

6. Installation apparatus according to claim 5, **characterised by**
a housing-side limit stop (16) which is at a spacing from the pin (12) in the sliding direction and can be brought into abutment with two limit stop edges of the latch (3) which define the two positions and receive the limit stop (16) between them.

7. Installation apparatus according to claim 6, **characterised in that** the latch (3) is a frame construction having an essentially rectangular base frame (20), the longitudinal webs (17) of which are connected to each other by a transverse strut (21) which is disposed in the central region of the longitudinal webs (17), on which base frame the one ends of the resilient webs (22) are fixed and which forms preferably the one limit stop edge of the latch (3).

8. Installation apparatus according to claim 7, **characterised in that** the other ends of the resilient webs (22) are fixed on one transverse web (18) of the base frame (20), a second transverse web (19) of the rectangular base frame (20) forming the other limit stop edge and receiving the housing-side projection (16) which is configured as a strip between itself and the transverse strut (21).

9. Installation apparatus according to claim 8, **characterised in that** the two resilient webs (22) respectively have a parallel spacing to the respectively adjacent longitudinal webs (17) of the base frame (20) which makes possible a free elastic deformation of the resilient webs (22) in the direction of the respective longitudinal webs (17).

10. Installation apparatus according to claim 9, **characterised in that** the spacing of the housing-side limit stop strip (16) relative to the pin (12) is chosen such that the two knobs (25), upon displacement of the latch (3) from one position into the other, must surmount convexities (14) of the cam paths (13) with elastic deformation of the resilient webs (22) and as a result are retained in the two positions upon abutment of the projection strip (16) with one of the limit stop edges of the latch (3).

## Revendications

1. Appareil d'installation, pour montage, sur un profilé support, avec un boîtier (1), dont une face est réalisée en un tronçon de montage (2), dans lequel est prévu un verrou (3), monté de façon déplaçable sur le boîtier (1), verrou susceptible d'être placé, en une première position, pour une mise en prise avec le profilé support et, en une deuxième position, susceptible d'être mis hors de prise vis-à-vis du profilé support, ce pourquoi le verrou (3) comprend une partie élastique, coopérant avec un dispositif d'encliquetage du boîtier (1), et comprend deux nervures élastiques (22) espacées, s'étendant parallèlement dans la direction de coulissement, les nervures élastiques formant chacune, dans leurs tronçons médians, une contre-dépouille, les contre-dépouilles étant en prise avec un tourillon (12), disposé entre les nervures élastiques (22), du dispositif d'encliquetage,
**caractérisé en ce que**
les deux nervures élastiques (22) sont fixées sur le verrou (3) à leur deux tronçons d'extrémité respectifs.

2. Appareil d'installation selon la revendication 1, **caractérisé en ce que**
les contre-dépouilles sont chacune formées par une saillie (25) en forme de téton, les deux saillies (25) étant opposées, en formant un rétrécissement de l'espacement parallèle des deux nervures élastiques (22).

3. Appareil d'installation selon la revendication 2, **caractérisé en ce que**
le tourillon (12) forme deux pistes de came (13) répondant à une symétrie axiale, opposées l'une à l'autre, chacune tournée vers une nervure élastique (22) et s'étendant dans la direction de coulissement.

4. Appareil d'installation selon la revendication 3, **caractérisé en ce que** les deux saillies (25) en forme de téton sont maintenues sur les pistes de came (13) avec l'élasticité d'un ressort, au moyen des nervures (22), et enserrent entre elles le tourillon.

5. Appareil d'installation selon la revendication 4, **caractérisé en ce que** chaque piste de came (12) comprend un bombement (14) sensiblement en forme de triangle, en direction de la nervure élastique (22) chaque fois opposée, auquel se raccorde, dans la direction de coulissement, un tronçon (15) parallèle à la nervure élastique (22) respective.

6. Appareil d'installation selon la revendication 5, **caractérisé par** une butée (16) située côté boîtier, espacée du tourillon (12) en observant dans la direction de coulissement, butée susceptible d'être mise en appui avec deux arêtes de butée du verrou (3), définissant les deux positions, recevant entre elles la butée (16).

7. Appareil d'installation selon la revendication 6, **caractérisé en ce que** le verrou est une construction en cadre, avec un cadre de base (20) sensiblement rectangulaire, dont des nervures longitudinales (17) sont reliées ensemble par une entretoise transversale (21) disposée dans la zone centrale des nervures longitudinales (17), entretoise transversale à laquelle sont fixées une extrémité des nervures élastiques (22) et formant de préférence une arête de butée du verrou (3).

8. Appareil d'installation selon la revendication 7, **caractérisé en ce que**
les autres extrémités des nervures élastiques (22) sont fixées à une nervure transversale (18) du cadre de base (20), une deuxième nervure transversale (19) du cadre de base (20) rectangulaire, formant l'autre arête de butée et recevant, entre soi et l'entretoise transversale (21), la saillie (16) située côté boîtier, réalisée sous forme de bande.

9. Appareil d'installation selon la revendication 8, **caractérisé en ce que** les deux nervures élastiques (22) présentent chacune un espacement parallèle envers les nervures longitudinales (17), chaque fois voisines, du cadre de base (20), qui permet une déformation élastique libre des nervures élastiques (22) dans la direction des nervures longitudinales (17) respectives.

10. Appareil d'installation selon la revendication 9, **caractérisé en ce que**
l'espacement de la bande de butée (16), située côté boîtier, et le tourillon (12) est choisi tel que, lors du déplacement du verrou (3), d'une position à l'autre, les deux tétons (25) doivent surmonter des bombements (14) des pistes de came (13), ceci s'accompagnant d'une déformation élastique des nervures élastiques (22), et de ce fait sont maintenues dans les deux positions lors de la venue en appui de la bande de saillie (16) avec l'une des arêtes de butée du verrou (3).
